# FASCICULE DE BREVET EUROPEEN

(11) **EP 3 303 686 B1**
(45) Date de publication et mention de la délivrance du brevet: **20.07.2022**
(21) Numéro de dépôt: 16725136.2
(22) Date de dépôt: 26.05.2016
(51) Int. Cl.: D07B 3/00, D07B 1/06, D07B 7/02

(54) **PROCÉDÉ D'ASSEMBLAGE COMPRENANT UNE ÉTAPE DE PRÉFORMATION**
MONTAGEVERFAHREN MIT EINEM VORFORMUNGSSCHRITT
ASSEMBLY METHOD COMPRISING A PREFORMING STEP

(30) Priorité: 26.05.2015 FR 1554698
(43) Date de publication de la demande: 11.04.2018
(73) Titulaire: Compagnie Générale des Etablissements Michelin, 63000 Clermont-Ferrand (FR)
(72) Inventeur: CALVET, Marc, 63040 Clermont-Ferrand Cedex 9 (FR); BARGUET, Henri, 63040 Clermont-Ferrand Cedex 9 (FR); AUBAREDE, Francis, 63040 Clermont-Ferrand Cedex 9 (FR)
(74) Mandataire: Desbordes, Guillaume
(86) Numéro de dépôt international: PCT/EP2016/061875
(87) Numéro de publication internationale: WO 2016/189073

(56) Documents cités:
- WO-A2-2012/055677
- DE-A1- 4 019 584
- JP-A- 2007 092 259
- US-B1- 6 412 263

## Description

L'invention concerne un procédé de fabrication d'un assemblage d'éléments filaires, un assemblage d'éléments filaires ainsi qu'un pneumatique comprenant un tel assemblage.

On connait de l'état de la technique un pneumatique pour véhicule poids lourd à armature de carcasse radiale. Un tel pneumatique comprend une armature de carcasse radiale ancrée dans deux bourrelets et surmontée radialement par une armature de sommet elle-même surmontée d'une bande de roulement qui est réunie aux bourrelets par deux flancs.

Dans un tel pneumatique, l'armature de sommet comprend une armature de travail, une armature de frettage, une armature de protection, et de façon optionnelle, une armature de triangulation. L'agencement relatif de ces armatures les unes par rapport aux autres peut varier. Généralement, l'armature de protection est l'armature radialement la plus externe, l'armature de travail est l'armature radialement la plus interne, l'armature de frettage étant agencée entre l'armature de protection et l'armature de travail.

Chaque armature comprend une unique ou plusieurs nappes. Chaque nappe comprend des éléments de renfort agencés côte à côte parallèlement les uns aux autres. Les éléments de renfort font un angle qui varie selon l'armature à laquelle la nappe appartient. Chaque élément de renfort comprend un ou plusieurs assemblages d'éléments filaires, chaque assemblage comprenant plusieurs fils unitaires métalliques assemblés entre eux, soit par câblage soit par retordage.

On connait de l'état de la technique un assemblage d'éléments filaires comprenant une unique couche d'éléments filaires, ici trois fils, présentant un diamètre de 0,26 mm enroulés ensemble en hélice au pas de 5 mm. Cet assemblage est désigné par l'appellation « 3.26 » conformément à la nomenclature usuelle.

Afin d'assurer le bon fonctionnement de chaque armature, et notamment des armatures de frettage et de protection, on souhaite pouvoir contrôler l'allongement structural de ces assemblages d'éléments filaires, et tout particulièrement pouvoir obtenir un allongement structural élevé lorsque cela s'avère nécessaire. L'utilisation d'un procédé de retordage classique permet d'obtenir un allongement structural au plus égal à 0,5% pour le câble 3.26 décrit ci-dessus.

Afin d'augmenter la valeur de l'allongement structural, on connait de l'état de la technique plusieurs procédés et installations de fabrication d'un assemblage d'éléments filaires comprenant une unique couche de plusieurs éléments filaires enroulés ensemble en hélice. De tels procédés et installations sont notamment décrits dans le document EP0143767. Lors de ces procédés, afin d'obtenir l'allongement structural le plus élevé possible, on préforme individuellement les éléments filaires, puis on assemble les éléments filaires préformés par câblage.

D'autres procédés d'assemblage par retordage et câblage des éléments filaires sont connus de DE4019584.

A cet effet, l'installation comprend des moyens d'alimentation et des moyens de préformation individuels de chaque fil agencés dans une nacelle mise en rotation agencée en amont du point d'assemblage des éléments filaires entre eux. Plus les moyens d'alimentation et de préformation sont lourds, plus la nacelle doit être dimensionnée de façon à résister mécaniquement à l'inertie générée par la masse de l'ensemble de la nacelle, des moyens d'alimentation et des moyens de préformation. Afin de limiter cette inertie, on est donc obligé de travailler à des vitesses de rotation relativement faibles ce qui limite la productivité de l'installation.

En outre, cette étape de préformation des éléments filaires ne permet d'atteindre des allongements structuraux élevés. En effet, l'utilisation d'un procédé d'assemblage utilisant une étape de préformation des fils permet d'obtenir un allongement structural au plus égal à 2,0% pour le câble 3.26 décrit ci-dessus.

L'invention a pour but d'obtenir des assemblages d'éléments filaires présentant un allongement structural élevé et ce, en mettant en œuvre un procédé plus productif que celui de l'état de la technique.

A cet effet, l'invention a pour objet un procédé de fabrication d'un assemblage d'éléments filaires enroulés ensemble en hélice selon la revendication 1.

Grâce au procédé selon l'invention, il est possible, si cela s'avère nécessaire, d'obtenir un allongement structural relativement élevé et ceci avec une productivité relativement élevée.

En effet, grâce à l'étape d'assemblage par retordage, il n'est pas nécessaire que les moyens situés en amont du point d'assemblage soient agencés dans une nacelle mise en rotation contrairement à un assemblage par câblage. Les moyens d'assemblage utilisés dans le cadre de l'invention peuvent alors être dimensionnés indépendamment de la vitesse d'assemblage. Ainsi, on peut utiliser des moyens d'alimentation de chaque élément filaire d'une contenance relativement élevée (et donc relativement lourds) ce qui permet d'arrêter moins souvent le procédé utilisant l'installation.

En outre, les moyens de préformation et de retordage peuvent être dimensionnés indépendamment les uns des autres, notamment en ce qui concerne leur encombrement et leur masse. Contrairement à un procédé comprenant une étape d'assemblage par câblage dans laquelle la masse et l'encombrement des moyens situés en amont du point d'assemblage doivent être aussi faibles que possible, le procédé selon l'invention permet d'utiliser de grandes variétés de moyens sans être limités par l'encombrement ou la masse des moyens de préformation et de retordage.

Enfin, l'étape de retordage appliquée individuellement à chaque élément filaire et positionnée en amont de l'étape de préformation, permet de ne pas agir sur la courbure des éléments filaires obtenue durant et après l'étape de préformation. En effet, l'étape de préformation individuelle ayant lieu en aval de l'étape de retordage individuel, le retordage ne peut supprimer l'hélice créée ultérieurement par la préformation. Les assemblages obtenus après l'étape d'assemblage présentent une aération importante liée à la conservation de la courbure des éléments filaires préformés. Cette aération permet d'obtenir des assemblages présentant un allongement structural important si cela s'avère nécessaire.

Contrairement à l'état de la technique dans lequel on assemble les éléments filaires par câblage et dans lequel les éléments filaires ne subissent pas de torsion autour de leur propre axe (en raison d'une rotation synchrone avant et après le point d'assemblage), le procédé selon l'invention comprend une étape de retordage individuel de chaque élément filaire durant laquelle chaque élément filaire subit une torsion individuelle autour de son propre axe. Lors de cette torsion individuelle, chaque élément filaire est déformé plastiquement et on génère, au sein de chaque élément filaire, un couple de torsion résiduelle. Aussi, durant cette étape de retordage individuel de chaque élément filaire, chaque élément filaire est ensuite équilibré par une détorsion de façon à annuler ce couple de torsion résiduelle. Ainsi, après l'étape de retordage individuel et avant l'étape de préformation individuelle, chaque élément filaire est retordu et équilibré.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 3 mm.

Par préformation en hélice, on entend une hélice tridimensionnelle inscrite dans un cylindre présentant un axe principal définissant l'axe d'hélice. L'hélice tridimensionnelle définit une trajectoire dont la projection sur un plan orthogonal à son axe d'hélice est un cercle et dont la projection sur un plan parallèle à son axe d'hélice est une sinusoïde. Selon l'invention l'assemblage d'éléments filaires comprend une unique couche formée par les éléments filaires de l'assemblage. Dans ce mode de réalisation, l'assemblage est dépourvu d'âme centrale agencée autour de laquelle seraient enroulés les éléments filaires de la couche.

Dans un autre mode qui ne relève pas l'invention et n'est présent qu'à titre illustratif, l'assemblage d'éléments filaires comprend une couche d'éléments filaires enroulés ensemble en hélice autour d'une âme centrale.

Z Dans une variante qui ne relève pas l'invention et n'est présente qu'à titre illustratif, le procédé comprend une étape d'assemblage de la couche d'éléments filaires enroulés ensemble en hélice autour de l'âme centrale de sorte que l'âme centrale présente une torsion sensiblement non nulle.

On utilise Z cette variante qui ne relève pas l'invention et n'est présente qu'à titre illustratif notamment dans le cas où l'âme centrale est textile et dont la torsion sensiblement non nulle n'impacte pas l'équilibrage en torsion de l'assemblage. Par sensiblement non nulle, on entend que l'âme présente une torsion supérieure à 10 tours par mètres.

Par textile, on entend que l'âme centrale est non-métallique. L'âme centrale peut alors comprendre un unique monofilament élémentaire textile ou bien plusieurs brins multifilamentaires textiles comprenant plusieurs monofilaments élémentaires textiles. Dans une variante, le noyau transitoire comprend un unique brin multifilamentaire appelé surtors comprenant plusieurs monofilaments élémentaires. Dans une variante, le noyau transitoire comprend plusieurs brins multifilamentaires, chacun appelé surtors, comprenant chacun plusieurs monofilaments élémentaires et assemblés ensemble en hélice pour former un retors.

Avantageusement, le ou chaque matériau textile de chaque monofilament élémentaire textile est choisi parmi un polyester, un polyamide, une polycétone, un alcool polyvinylique, une cellulose, une fibre minérale, une fibre naturelle ou un mélange de ces matériaux.

Parmi les polyesters, on citera le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN). Parmi les polyamides, on citera un polyamide aliphatique comme le nylon ou un polyamide aromatique comme l'aramide. Parmi les alcools polyvinyliques, on citera le Kuralon ^{®}. Parmi les celluloses, on citera la rayonne. Parmi les fibres minérales, on citera les fibres de verre et de carbone. Parmi les fibres naturelles, on citera les fibres de chanvre ou de lin.

Dans une variante qui ne relève pas l'invention et n'est présente qu'à titre illustratif, le procédé comprend une étape d'assemblage de la couche d'éléments filaires enroulés ensemble en hélice autour de l'âme centrale de sorte que l'âme centrale présente une torsion sensiblement nulle. On utilise cette variante notamment dans le cas où l'âme centrale est métallique et dont la torsion sensiblement non nulle impacterait significativement l'équilibrage en torsion de l'assemblage. Par sensiblement nulle, on entend que l'âme présente une torsion inférieure à 10 tours par mètres.

Avantageusement, la couche comprend entre 2 et 9 éléments filaires, de préférence entre 5 et 9 éléments filaires. Par entre 2 et 9 éléments filaires, on comprend que la couche peut comprendre 2, 3, 4, 5, 6, 7, 8 ou 9 éléments filaires. Dans un assemblage de l'état de la technique comportant au moins 5 éléments filaires non-préformés, un des éléments filaires se positionne au centre de l'assemblage. L'invention permet avantageusement de résoudre ce problème quel que soit le nombre d'éléments filaires de l'assemblage.

De façon préférée, l'angle d'hélice d'au moins chaque premier et deuxième élément filaire est compris entre 10° et 25°. L'angle d'hélice est égal, dans un plan de projection de l'hélice par lequel passe son axe longitudinal, à l'angle mesuré entre la projection de l'axe longitudinal sur le plan de projection et la tangente à la projection de l'hélice au point d'intersection de la projection de l'hélice et de la projection de l'axe longitudinal.

De façon préférée, le pas P de l'hélice d'au moins chaque premier et deuxième élément filaire est tel que P=k1.d dans lequel d est le diamètre de chaque premier et deuxième élément filaire avec k1 allant de 15 à 50. Le pas d'hélice P est égal à la distance, selon l'axe de l'élément filaire, que parcourt un point de la fibre neutre de l'élément filaire après avoir parcouru un tour complet du cercle décrit par la fibre neutre.

De façon préférée, le diamètre D de l'hélice d'au moins chaque premier et deuxième élément filaire est tel que D=k2.d dans lequel d est le diamètre de chaque premier et deuxième élément filaire avec k2 allant de 2 à 5. Le diamètre d'hélice D est égal au diamètre du cercle décrit par la fibre neutre F de chaque élément filaire. On peut également déterminer le diamètre d'hélice D comme étant égal à la distance séparant les centres de deux éléments filaires diamétralement opposés au sein de l'assemblage A.

De tels angles, pas P et diamètres D d'hélice sont compatibles avec une utilisation de l'assemblage en pneumatique.

Dans un mode de réalisation, chaque premier et deuxième élément filaire est constitué d'un unique monofilament élémentaire métallique.

Dans un autre mode de réalisation, chaque premier et deuxième élément filaire est constitué d'un toron comprenant plusieurs monofilaments élémentaires métalliques. Ainsi, par exemple, chaque élément filaire comprend un toron de plusieurs monofilaments élémentaires. Chaque toron comprend de préférence une ou plusieurs couches de monofilaments élémentaires enroulés ensemble en hélice.

Dans ces deux modes de réalisation, chaque monofilament élémentaire est de préférence métallique. Par métallique, on entend par définition un monofilament élémentaire constitué majoritairement (c'est-à-dire pour plus de 50% de sa masse) ou intégralement (pour 100% de sa masse) d'un matériau métallique. Chaque monofilament élémentaire est préférentiellement en acier, plus préférentiellement en acier perlitique (ou ferrito-perlitique) au carbone désigné ci-après par "acier au carbone", ou encore en acier inoxydable (par définition, acier comportant au moins 10,5% de chrome).

Lorsqu'un acier au carbone est utilisé, sa teneur en carbone (% en masse d'acier) est de préférence comprise entre 0,5% et 0,9%. On utilise de préférence un acier du type steel cord à résistance normale (dit "NT" pour " Normal Tensile ") ou à haute résistance (dit "HT" pour " High Tensile ") dont la résistance en traction (Rm) est de préférence supérieure à 2000 MPa, plus préférentiellement supérieure à 2500 MPa et inférieure à 3500 MPa (mesure effectuée en traction selon la norme ISO 6892-1 de 2009).

Dans un mode de réalisation préféré, le diamètre du ou de chaque monofilament élémentaire va de 0,05 mm à 0,50 mm, de préférence de 0,10 mm à 0,40 mm et plus préférentiellement de 0,15 mm à 0,35 mm.

On décrit ici un assemblage d'éléments filaires enroulés ensemble en hélice, susceptible d'être obtenu par un procédé tel que défini ci-dessus.

Avantageusement, l'assemblage d'éléments filaires présente un allongement structural supérieur ou égal à 3,0%, de préférence 4,0% et plus préférentiellement 5,0% mesuré selon la norme ASTM A931-08.

On décrit ici un pneumatique comprenant un assemblage d'éléments filaires tel que défini ci-dessus.

Un tel pneumatique est notamment destiné à équiper des véhicules à moteur de type tourisme, SUV *("Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

De préférence, le pneumatique comprend une bande de roulement et une armature de sommet agencée radialement à l'intérieur de la bande de roulement. L'armature de sommet comprend de préférence une armature de travail et une armature de protection, l'armature de protection étant intercalée radialement entre la bande de roulement et l'armature de travail. Dans un mode de réalisation préféré, chaque nappe de protection comprenant un ou plusieurs éléments de renfort, dit de protection, chaque élément de renfort de protection comprend un assemblage tel que décrit ci-dessus.

Selon une caractéristique optionnelle du pneumatique, le ou les éléments de renfort de protection font un angle au moins égal à 10°, de préférence allant de 10° à 35° et plus préférentiellement de 15° à 35° avec la direction circonférentielle du pneumatique.

Selon une autre caractéristique optionnelle du pneumatique, chaque nappe de travail comprenant des éléments de renfort, dit de travail, les éléments de renfort de travail font un angle au plus égal à 60°, de préférence allant de 15° à 40° avec la direction circonférentielle du pneumatique.

Dans un mode de réalisation préféré, l'armature de sommet comprend une armature de frettage comprenant au moins une nappe de frettage. Dans un mode de réalisation préféré, chaque nappe de frettage comprenant un ou plusieurs éléments de renfort, dit de frettage, chaque élément de frettage comprend un assemblage tel que décrit ci-dessus.

Selon une caractéristique optionnelle du pneumatique, le ou les éléments de renfort de frettage font un angle au plus égal à 10°, de préférence allant de 5° à 10° avec la direction circonférentielle du pneumatique.

Dans un mode de réalisation préféré, l'armature de carcasse est agencée radialement à l'intérieur de l'armature de sommet.

Avantageusement, l'armature de carcasse comprend au moins une nappe de carcasse comprenant des éléments de renfort, dit de carcasse, les éléments de renfort de carcasse faisant un angle supérieur ou égal à 65°, de préférence à 80° et plus préférentiellement allant de 80° à 90° par rapport à la direction circonférentielle du pneumatique.

L'invention sera mieux comprise à la lecture de la description qui va suivre, donnée uniquement à titre d'exemple non limitatif et faite en se référant aux dessins dans lesquels:
- la figure 1 est un schéma d'une installation permettant de mettre en œuvre un procédé selon un premier mode de réalisation de l'invention et de fabriquer l'assemblage de la figure 2 ;
- la figure 2 est une vue en coupe perpendiculaire à l'axe de l'assemblage (supposé rectiligne et au repos) d'un assemblage selon un premier mode de réalisation de l'invention fabriqué au moyen de l'installation de la figure 1;
- la figure 3 est une vue d'un fil de l'assemblage de la figure 2 projeté sur un plan parallèle à l'axe de l'assemblage ;
- la figure 4 est un schéma d'une installation permettant de mettre en œuvre un procédé selon un deuxième mode qui ne relève pas l'invention et n'est présent qu'à titre illustratif et de fabriquer l'assemblage de la figure 5 ;
- la figure 5 est une vue en coupe perpendiculaire à l'axe de l'assemblage (supposé rectiligne et au repos) d'un assemblage selon un deuxième mode qui ne relève pas l'invention et n'est présent qu'à titre illustratif fabriqué au moyen de l'installation de la figure 4 ;
- la figure 6 est un schéma d'une installation permettant de mettre en œuvre un procédé selon un troisième mode qui ne relève pas l'invention et n'est présent qu'à titre illustratif et de fabriquer l'assemblage de la figure 7 ;
- la figure 7 est une vue en coupe perpendiculaire à l'axe de l'assemblage (supposé rectiligne et au repos) d'un assemblage selon un troisième mode qui ne relève pas l'invention et n'est présent qu'à titre illustratif fabriqué au moyen de l'installation de la figure 6.

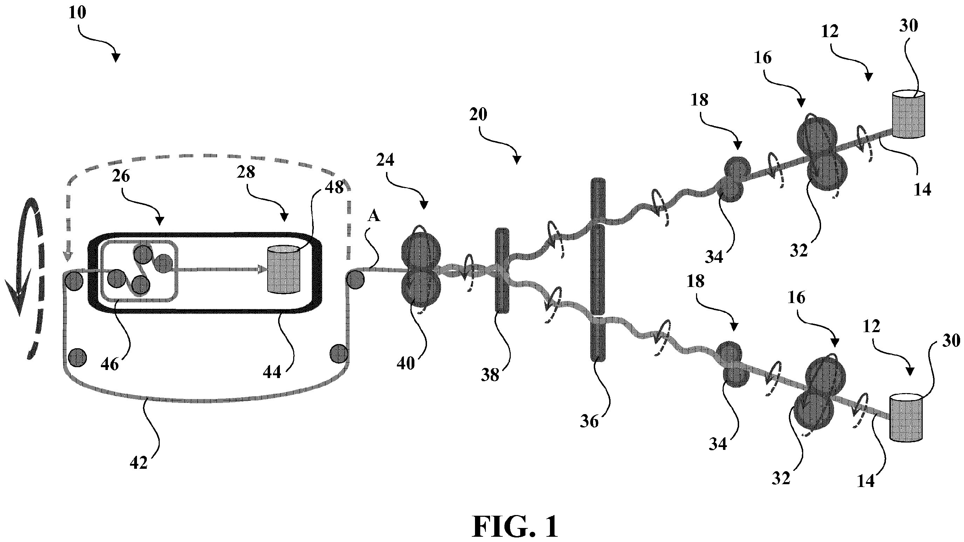

On a représenté sur la figure 1 une installation de fabrication d'un assemblage A d'éléments filaires enroulés ensemble en hélice. Cette installation est désignée par la référence générale 10.

L'installation 10 comprend, d'amont en aval en considérant le sens de défilement des éléments filaires :
- des moyens 12 d'alimentation de M éléments filaires 14,
- des moyens 16 de retordage individuel de chaque élément filaire 14,
- des moyens 18 de préformation individuelle de chaque élément filaire 14,
- des moyens 20 d'assemblage des éléments filaires 14 ensemble en hélice pour former l'assemblage A,
- des moyens 24 d'entretien de la rotation de l'assemblage A autour de son axe,
- des moyens 26 d'équilibrage de l'assemblage A, et
- des moyens 28 de stockage de l'assemblage A.

L'installation 10 comprend également des moyens de guidage, de déroulage et de traction des éléments filaires et de l'assemblage classiquement utilisés par l'homme du métier, par exemple des poulies et des cabestans.

Les moyens d'alimentation 12 comprennent une bobine 30 de stockage de chaque élément filaire. Pour des raisons de clarté des figures, on a représenté sur celles-ci uniquement deux éléments filaires 14 et donc uniquement les moyens correspondants.

Les moyens 16 de retordage individuel de chaque élément filaire 14 comprennent un retordeur 32, également appelé communément « twister » par l'homme du métier, par exemple un twister à deux poulies.

Les moyens 18 de préformation individuelle de chaque élément filaire 14 comprennent par exemple un dispositif 34 de préformation à rouleaux tel que décrit dans US5533327A ou US4566261A.

Les moyens d'assemblage 20 comprennent un répartiteur 36 et, en aval, un grain d'assemblage 38.

Les moyens 24 d'entretien de la rotation sont agencés en aval du grain d'assemblage 38 et comprennent un twister 40, par exemple un twister à deux poulies permettant d'entretenir la rotation l'assemblage A respectivement autour de la direction principale de l'assemblage A.

En aval des moyens 24 d'entretien de la rotation et du grain d'assemblage 38, les moyens d'assemblage 20 comprennent une lyre 42 ainsi qu'une nacelle 44 portant les moyens d'équilibrage 26 et les moyens 28 de stockage. La lyre 42 et la nacelle 44 sont montées mobiles en rotation de façon à imposer le pas de l'assemblage A.

Les moyens d'équilibrage 26 comprennent un twister 46, par exemple un twister à quatre poulies.

Les moyens de stockage 28 comprennent ici une bobine 48 de stockage de l'assemblage A.

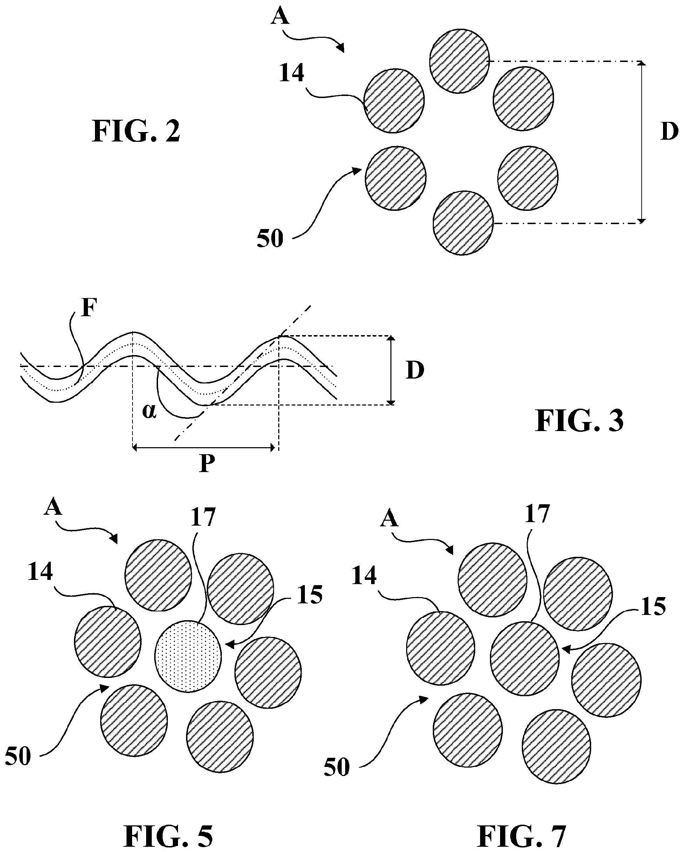

On a représenté sur les figures 2 et 3 l'assemblage A selon le premier mode de réalisation de l'invention fabriqué au moyen de l'installation de la figure 1.

L'assemblage A comprend, ici est constitué de, une unique couche 50 formée par les M éléments filaires de l'assemblage. Les M éléments filaires sont enroulés ensemble en hélice. La couche 50 comprend entre 2 et 9 éléments filaires 14. Ici, la couche 50 comprend, ici est constituée de, M éléments filaires 14 (M=6). L'assemblage A de la figure 2 est dépourvu d'âme centrale.

Chaque élément filaire 14 comprend, ici est constitué d'un unique monofilament élémentaire métallique de section circulaire, ici en acier au carbone, présentant un diamètre allant de 0,05 à 0,50 mm, de préférence allant de 0,10 mm à 0,40 mm et préférentiellement de 0,15 à 0,35 mm. ici égal à 0,26 mm.

L'assemblage A présente un allongement structural supérieur ou égal à 2,0% mesuré selon la norme ASTM A931-08. Avantageusement, il présente un allongement structural supérieur ou égal à 3,0%, de préférence 4,0% et plus préférentiellement 5,0% mesuré selon la norme ASTM A931-08.

Chaque fil 14 est préformé grâce aux moyens de préformation individuel 18. Chaque fil 14 suit une trajectoire ayant la forme d'une hélice tridimensionnelle caractérisée par un angle d'hélice a, un pas d'hélice P et un diamètre d'hélice D.

Comme illustré sur la figure 3, l'angle d'hélice α est égal, dans un plan de projection de l'hélice par lequel passe son axe longitudinal, à l'angle mesuré entre la projection de l'axe longitudinal sur le plan de projection et la tangente à la projection de l'hélice au point d'intersection de la projection de l'hélice et de la projection de l'axe longitudinal. L'angle d'hélice α de chaque élément filaire 14 est compris entre 10° et 25°.

Comme illustré sur les figures 2 et 3, le diamètre d'hélice D est égal au diamètre du cercle décrit par la fibre neutre F de chaque élément filaire 14. On peut également déterminer le diamètre d'hélice D comme étant égal à la distance séparant les centres de deux éléments filaires diamétralement opposés au sein de l'assemblage A. Le diamètre D de l'hélice de chaque élément filaire 14 est tel que D=k2.d dans lequel d est le diamètre de chaque élément filaire 14 avec k2 allant de 2 à 5.

Comme illustré sur les figures 2 et 3, le pas d'hélice P est égal à la distance, selon l'axe de l'élément filaire, que parcourt un point de la fibre neutre F de l'élément filaire après avoir parcouru un tour complet du cercle décrit par la fibre neutre F. Le pas P de l'hélice d'au moins chaque premier et deuxième élément filaire 14 est tel que P=k1.d dans lequel d est le diamètre de chaque élément filaire 14 avec k1 allant de 15 à 50.

L'assemblage A est notamment utilisé en pneumatique et plus préférentiellement dans les nappes de protection ou de frettage de pneumatiques telles que décrites précédemment.

Nous allons maintenant décrire un procédé de fabrication de l'assemblage A selon un premier mode de réalisation, mis en œuvre au moyen de l'installation 10.

Tout d'abord, on déroule individuellement les éléments filaires 14 depuis les moyens d'alimentation 12, ici les bobines 30.

Puis, le procédé comprend une étape de retordage individuel de chaque élément filaire 14. Ainsi, chaque élément filaire 14 est retordu individuellement et séparément par rapport aux autres. On réalise l'étape de retordage individuel des éléments filaires 14 grâce aux retordeurs 32. Au cours de cette étape de retordage, on fait subir à chaque élément filaire 14 une torsion autour de son propre axe, puis on équilibre en torsion chaque élément filaire 14. Après l'étape de retordage individuel, chaque élément filaire 14 est donc retordu et équilibré en torsion.

Ensuite, le procédé comprend une étape de préformation individuelle en hélice de chaque élément filaire 14 préalablement retordu. Ainsi, chaque élément filaire 14 préalablement retordu est préformé individuellement et séparément par rapport aux autres. On réalise l'étape de préformation individuelle des éléments filaires 14 grâce aux préformateurs 34.

Puis, le procédé comprend une étape d'assemblage ensemble des éléments filaires 14 retordus et préformés pour former l'assemblage A d'éléments filaires 14. On réalise l'étape d'assemblage grâce au répartiteur 36, au grain d'assemblage 38 mais également grâce aux moyens agencés en aval du grain d'assemblage 38 que sont la lyre 42 et la nacelle 44.

Ensuite, le procédé comprend une étape d'entretien de la rotation de l'assemblage A autour de sa direction de défilement. On réalise cette étape d'entretien de la rotation grâce au twister 40.

Puis, le procédé comprend également une étape d'équilibrage de l'assemblage A. On réalise cette étape d'équilibrage en aval de l'étape d'assemblage grâce au twister 46.

Enfin, on stocke l'assemblage A dans la bobine de stockage 48.

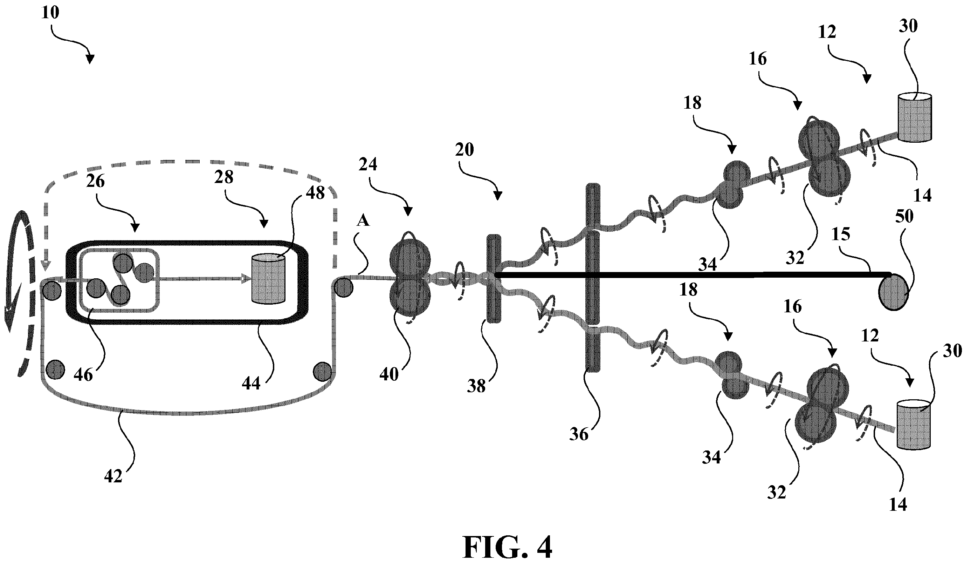

On a illustré sur les figures 4 et 5 une installation et un assemblage A conformes à un deuxième mode qui ne relève pas l'invention et n'est présent qu'à titre illustratif. Les éléments analogues à ceux représentés sur les figures 1 à 3 sont désignés par des références identiques.

A la différence du premier mode de réalisation, l'installation de la figure 4 comprend en plus des moyens 12 de stockage des éléments filaires 14, des moyens 50 d'alimentation d'une âme centrale 15.

Ainsi, comme illustré sur la figure 5, l'assemblage A comprend, ici est constitué, d'une couche de M éléments filaires enroulés ensemble en hélice autour de l'âme centrale 15 comprenant N élément(s) filaire(s) textile(s) 17. L'assemblage A est ici tel que M=6 et N=1. En variante on pourrait prévoir que N>1, par exemple N=2 ou 3.

Chaque élément filaire textile 17 comprend ici plusieurs brins multifilamentaires, chacun appelé surtors, comprenant chacun plusieurs monofilaments élémentaires et assemblés ensemble en hélice pour former un retors. Les monofilaments élémentaires sont textiles, ici en PET.

A la différence du procédé selon le premier mode de réalisation, l'étape d'assemblage est une étape d'assemblage des éléments filaires 14 et de l'âme centrale 15. L'étape d'assemblage est réalisée de sorte que l'âme centrale 15 présente une torsion sensiblement non-nulle. Cette torsion est sensiblement égale à la torsion imposée par la lyre 42, les moyens d'alimentation 50 étant fixes par rapport au grain d'assemblage 38.

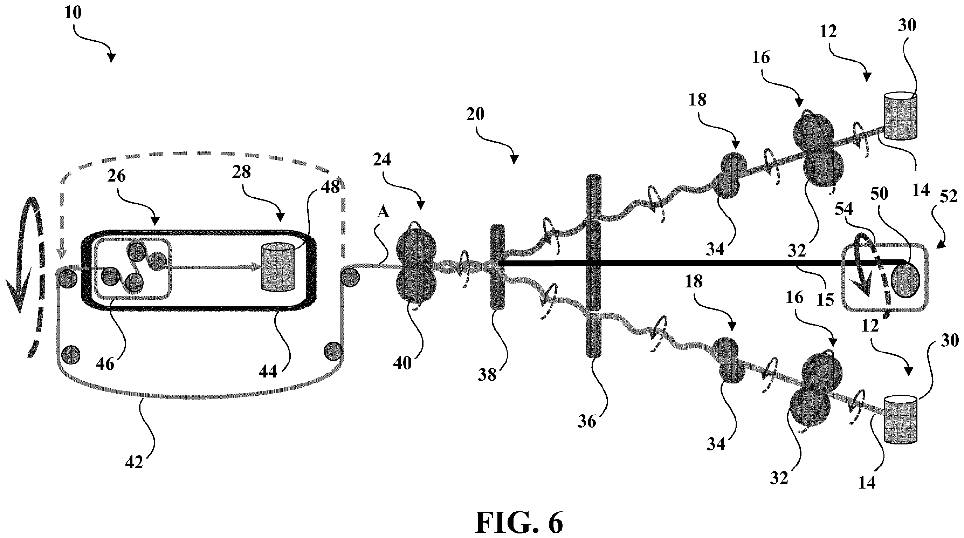

On a illustré sur les figures 6 et 7 une installation et un assemblage A conformes à un troisième mode qui ne relève pas l'invention et n'est présent qu'à titre illustratif. Les éléments analogues à ceux représentés sur les figures précédentes sont désignés par des références identiques.

A la différence du deuxième mode de réalisation, l'installation de la figure 6 comprend, en plus des moyens d'alimentation 50 de l'âme centrale 15, des moyens 52 de mise en rotation des moyens 50. En l'espèce ces moyens de mise en rotation comprennent une nacelle 54.

Ainsi, comme illustré sur la figure 7, l'assemblage A comprend, ici est constitué, d'une couche de M éléments filaires enroulés ensemble en hélice autour de l'âme centrale 15 comprenant N élément(s) filaire(s) métallique(s) 17. L'assemblage A est ici tel que M=6 et N=1. En variante on pourrait prévoir que N>1, par exemple N=2 ou 3.

Chaque élément filaire métallique 17 est ici un monofilament élémentaire métallique, par exemple un fil en acier de diamètre compris entre 0,05 mm et 0,50 mm, ici égal à 0,20 mm.

A la différence du procédé selon le deuxième mode de réalisation, l'étape d'assemblage est réalisée de sorte que l'âme centrale 15 présente une torsion sensiblement nulle. Cette torsion sensiblement nulle est obtenue en synchronisant la rotation de la lyre 42 et la rotation des moyens d'alimentation 50.

L'invention ne se limite pas aux modes de réalisation précédemment décrits.

En effet, on pourra envisager d'exploiter l'invention avec des éléments filaires comprenant chacun plusieurs monofilaments élémentaires métalliques. Chaque élément filaire est alors constitué d'un toron comprenant les monofilaments élémentaires métalliques. Une fois assemblés, les éléments filaires ou torons, forme un câble multi-torons.

## Revendications

1. Procédé de fabrication d'un assemblage (A) d'éléments filaires (14) enroulés ensemble en hélice, **caractérisé en ce qu'il** comprend :
- une étape de retordage d'au moins des premier et deuxième éléments filaires (14), les premier et deuxième éléments filaires (14) étant retordus séparément l'un de l'autre de telle sorte à ce que chaque élément filaire (14) soit déformé plastiquement,
- une étape de préformation en hélice d'au moins les premier et deuxième éléments filaires retordus (14), les premier et deuxième éléments filaires retordus (14) étant préformés séparément l'un de l'autre,
- une étape d'assemblage d'au moins les premier et deuxième éléments filaires (14) retordus et préformés pour former l'assemblage (A) d'éléments filaires (14) et ;
dans lequel l'assemblage (A) d'éléments filaires (14) comprend une unique couche (50) formée par les éléments filaires (14) de l'assemblage (A).

2. Procédé selon la revendication 1, dans lequel la couche (50) comprend entre 2 et 9 éléments filaires, de préférence entre 5 et 9 éléments filaires.

3. Procédé selon l'une quelconque des revendications précédentes, dans lequel l'angle d'hélice (a) d'au moins chaque premier et deuxième élément filaire (14) est compris entre 10° et 25°.

4. Procédé selon l'une quelconque des revendications précédentes, dans lequel le pas P de l'hélice d'au moins chaque premier et deuxième élément filaire (14) est tel que P=k1.d dans lequel d est le diamètre de chaque premier et deuxième élément filaire (14) avec k1 allant de 15 à 50.

5. Procédé selon l'une quelconque des revendications précédentes, dans lequel le diamètre D de l'hélice d'au moins chaque premier et deuxième élément filaire (14) est tel que D=k2.d dans lequel d est le diamètre de chaque premier et deuxième élément filaire (14) avec k2 allant de 2 à 5.

6. Procédé selon l'une quelconque des revendications 1 à 5, dans lequel chaque premier et deuxième élément filaire (14) est constitué d'un unique monofilament élémentaire métallique.

7. Procédé selon l'une quelconque des revendications 1 à 5, dans lequel chaque premier et deuxième élément filaire (14) est constitué d'un toron comprenant plusieurs monofilaments élémentaires métalliques.

8. Procédé selon la revendication 6 ou 7, dans lequel le diamètre du ou de chaque monofilament élémentaire métallique va de 0,05 mm à 0,50 mm, de préférence de 0,10 mm à 0,40 mm et préférentiellement de 0,15 mm à 0,35 mm.

## Patentansprüche

1. Verfahren zur Herstellung einer Anordnung (A) von Garnelementen (14), die zusammen wendelförmig gewickelt sind, **dadurch gekennzeichnet, dass** es Folgendes umfasst:
- einen Schritt des Verdrehens von mindestens einem ersten und einem zweiten Garnelement (14), wobei das erste und das zweite Garnelement (14) getrennt voneinander so verdreht werden, dass jedes Garnelement (14) plastisch verformt wird,
- einen Schritt des wendelförmigen Vorformens von mindestens dem ersten und dem zweiten verdrehten Garnelement (14), wobei das erste und das zweite verdrehte Garnelement (14) getrennt voneinander vorgeformt werden,
- einen Schritt des Zusammenfügens von mindestens dem ersten und dem zweiten verdrehten und vorgeformten Garnelement (14), um die Anordnung (A) von Garnelementen (14) zu bilden, und
wobei die Anordnung (A) von Garnelementen (14) eine einzelne Schicht (50) umfasst, die durch die Garnelemente (14) der Anordnung (A) gebildet ist.

2. Verfahren nach Anspruch 1, wobei die Schicht (50) zwischen 2 und 9 Garnelemente, vorzugsweise zwischen 5 und 9 Garnelemente, umfasst.

3. Verfahren nach einem der vorangehenden Ansprüche, wobei der Steigungswinkel (α) von mindestens jedem ersten und zweiten Garnelement (14) zwischen 10° und 25° beträgt.

4. Verfahren nach einem der vorangehenden Ansprüche, wobei die Steigung P der Wendel von mindestens jedem ersten und zweiten Garnelement (14) so ist, dass P=k1.d, wobei d der Durchmesser jedes ersten und zweiten Garnelements (14) ist und k1 im Bereich von 15 bis 50 liegt.

5. Verfahren nach einem der vorangehenden Ansprüche, wobei der Durchmesser D der Wendel von mindestens jedem ersten und zweiten Garnelement (14) so ist, dass D=k2.d, wobei d der Durchmesser jedes ersten und zweiten Garnelements (14) ist und k2 im Bereich von 2 bis 5 liegt.

6. Verfahren nach einem der Ansprüche 1 bis 5, wobei jedes erste und zweite Garnelement (14) aus einem einzelnen elementaren Metallmonofilament gebildet ist.

7. Verfahren nach einem der Ansprüche 1 bis 5, wobei jedes erste und zweite Garnelement (14) aus einer Litze gebildet ist, die mehrere elementare Metallmonofilamente umfasst.

8. Verfahren nach Anspruch 6 oder 7, wobei der Durchmesser des bzw. jedes elementaren Metallmonofilaments im Bereich von 0,05 mm bis 0,50 mm, vorzugsweise im Bereich von 0,10 mm bis 0,40 mm und besonders vorzugsweise im Bereich von 0,15 mm bis 0,35 mm liegt.

## Claims

1. Method for producing an assembly (A) of wire elements (14) wound together into a helix, **characterized in that** it comprises:
- a step of twisting at least the first and second wire elements (14), the first and second wire elements (14) being twisted separately from one another in such a way that each wire element (14) experiences plastic deformation,
- a step of pre-forming at least the first and second twisted wire elements (14) into a helix, the first and second twisted wire elements (14) being pre-formed separately from one another,
- a step of assembling at least the first and second twisted and pre-formed first and second wire elements (14) to form the assembly (A) of wire elements (14), and wherein the assembly (A) of wire elements (14) comprises a single layer (50) formed by the wire elements (14) of the assembly (A).

2. Method according to Claim 1, wherein the layer (50) comprises between 2 and 9 wire elements, preferably between 5 and 9 wire elements.

3. Method according to either one of the preceding claims, wherein the helix angle (α) of at least each first and second wire element (14) is between 10° and 25°.

4. Method according to any one of the preceding claims, wherein the pitch P of the helix of at least each first and second wire element (14) obeys the relation P=k1.d, where d is the diameter of each first and second wire element (14), with k1 being in the range from 15 to 50.

5. Method according to any one of the preceding claims, wherein the diameter D of the helix of at least each first and second wire element (14) obeys the relation D=k2.d, where d is the diameter of each first and second wire element (14), with k2 being in the range from 2 to 5.

6. Method according to any one of Claims 1 to 5, wherein each first and second wire element (14) consists of a single elementary metal monofilament.

7. Method according to any one of Claims 1 to 5, wherein each first and second wire element (14) consists of a strand comprising multiple elementary metal monofilaments.

8. Method according to Claim 6 or 7, wherein the diameter of the or each elementary metal monofilament ranges from 0.05 mm to 0.50 mm, preferably from 0.10 mm to 0.40 mm, and preferably from 0.15 mm to 0.35 mm.
